(19) Europäisches Patentamt
European Patent Office
Office européen des brevets

(11) Veröffentlichungsnummer: **0 091 463**
**B1**

(12) **EUROPÄISCHE PATENTSCHRIFT**

(45) Veröffentlichungstag der Patentschrift: **05.03.86**

(51) Int. Cl.⁴: **E 21 B 7/14**, B 23 K 7/08

(21) Anmeldenummer: **82903145.9**

(22) Anmeldetag: **12.10.82**

(86) Internationale Anmeldenummer: **PCT/EP 82/00227**

(87) Internationale Veröffentlichungsnummer: **WO/8301480 (28.04.83 Gazette 83/10)**

(54) **UNTERWASSER-SCHNEIDWERKZEUG.**

(30) Priorität: **20.10.81 DE 3141583**

(43) Veröffentlichungstag der Anmeldung: **19.10.83 Patentblatt 83/42**

(45) Bekanntmachung des Hinweises auf die Patenterteilung: **05.03.86 Patentblatt 86/10**

(84) Benannte Vertragsstaaten: **DE FR GB NL SE**

(56) Entgegenhaltungen:
**EP-A- 0 007 289**
**DE-A- 2 300 265**
**FR-A- 1 002 142**
**GB-A- 668 393**
**US-A- 3 507 230**
**US-A- 4 050 680**
**US-A- 4 182 947**

(73) Patentinhaber: **MOLINDER, Lars Anders**
**Storängsgatan 4**
**S-41319 Göteborg (SE)**

(72) Erfinder: **MOLINDER, Lars Anders**
**Storängsgatan 4**
**S-41319 Göteborg (SE)**

(74) Vertreter: **Patentanwälte Kern, Popp, Sajda, v. Bülow & Partner**
**Widenmayerstrasse 48 Postfach 86 06 24**
**D-8000 München 86 (DE)**

**EP 0 091 463 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Unterwasser-Schneidwerkzeug für Stahl, Beton oder dgl. gemäß dem Oberbegriff des Patentanspruches 1.

Ein solches Schneidwerkzeug ist aus der US-A-3,507,230 bekannt. Ein Nachteil dieses Schneidwerkzeuges liegt darin, daß die Lanze unter Wasser praktisch nicht ausgewechselt werden kann. Da die bekannte Lanze nur an ihrem vorderen, freien Ende abgedichtet ist, würde sie bei einem Auswechseln unter Wasser mit Wasser vollaufen, das erst ausgeblasen werden müßte. Solange die Versiegelung mit dem zünder noch auf dem vorderen freien Ende angebracht ist, kann dieses Ausblasen nicht erfolgen. Wird dagegen zuerst der Zünder gezündet und damit die Versiegelung entfernt, so würde das zunächst im Inneren der Lanze befindliche Wasser ausgeblasen werden, so daß der Zünder erloschen ist, bevor nach dem Ausblasen dann Sauerstoff zu dem freien Ende der Lanze gelangt.

Aus der DE-A1-23 00 265 ist ein ähnliches Unterwasser-Schneidwerkzeug bekannt, bei dem im Inneren der rohrförmigen Lanze ein Brennkern aus Leichtmetall geführt ist. Dieser Brennkern wird während des Schneidvorganges kontinuierlich nach vorne nachgeführt und zwar durch das pistolengirffseitige Ende des Werkzeuges. Zur Abdichtung des pistolengriffseitigen Endes gegenüber dem dort herausragenden Brennkern ist am rückwärtigen Ende des Griffes ein abdichtendes Ventil angebracht. Ein Auswechseln der Lanze unter Wasser ist hierbei jedoch ebenfalls nicht möglich.

Weitere herkömmliche thermische Lanzen (z. B. US-A-4,050,680 oder 4,055,332) werden in der Regel nur über Wasser eingesetzt, können jedoch bedingt auch unter Wasser verwendet werden, dann jedoch nur in geringeren Wassertiefen, da sie oberhalb der Wasserfläche gezündet werden müssen, um dann von einem Taucher zur Arbeitsstelle gebracht zu werden. Die vorzeitige Zündung oberhalb der Wasserfläche bedeutet einen erheblichen Sauerstoffverlust. Ferner ist das Verletzungsrisiko für den Taucher sehr groß. Die maximale Arbeitstiefe dieser thermischen Lanzen beträgt etwa 30 Meter. Bei diesen thermischen Lanzen beträgt der Durchmesser etwa 3/8″ (9,53 mm). Es kommen jedoch auch Lanzen mit kleineren oder größeren Durchmessern zur Anwendung wie z. B. 1/2″ (12,7 mm) und 1/4″ (6,35 mm).

Ausgehend von dem eingangs genannten Unterwasser-Schneidgerät ist es Aufgabe der Erfindung, dieses dahingehend zu verbessern, daß es sicher unter Wasser zündbar ist und zwar auch in größeren Tiefen, wobei zusätzlich ein Auswechseln einer Lanze unter Wasser möglich sein soll.

Diese Aufgabe wird durch die im kennzeichnenden Teil Des Patentanspruches 1 angegebenen Merkmale gelöst. Vorteilhafte Ausgestaltungen und Weiterbildungen der Erfindung sind den Unteransprüchen zu entnehmen.

Die gesamte Apparatur kann vor der Zündung der Lanze zur Arbeitsstelle transportiert werden. Der Taucher ist durch die gezündete Lanze in keiner Weise gefährdet. Die Versiegelung ist so dimensioniert, daß sie einen Wasserdruck bis zu einer Tiefe von 400 m aushält. Zusätzlich hält die Versiegelung auch einen inneren Überdruck von 5 bis 10 bar gegenüber dem äußeren Wasserdruck stand.

Bei einem Ausführungsbeispiel mit chemischer Zündung unter Verwendung von Thermit, wird vorzugsweise Eisenthermit verwendet, dessen Reaktion wie folgt abläuft :

$$Fe_2O_3 + 2\ Al + 2\ Fe + Al_2O_3 + 2\,181{,}5\ kcal\ (2\,960\ ^\circ C).$$

Im folgenden wird eine bevorzugte Ausführungsform der Erfindung anhand der beigefügten schematischen Zeichnungen näher erläutert. Es zeigen :

Figur 1 eine Gesamtanordnung der Schneidvorrichtung,

Figur 2 die erfindungsgemäß ausgebildete thermische Lanze vor der Ingebrauchnahme in Seitenansicht,

Figur 3 die thermische Lanze gemäß Fig. 2 mit durchbrochener innerer Versiegelung,

Figur 4 die thermische Lanze mit gezündeter äußerer Versiegelung,

Figur 5 einen Teil der thermischen Lanze mit Details des Zündsatzes an der das freie Ende der Lanze verschließenden Versiegelung.

Das in Fig. 1 dargestellte Unterwasser-Schneidwerkzeug umfaßt neben einer thermischen Lanze 10 mit einem Pistolengriff 16 als Handhabe zwei Sauerstofflaschen 24, 25, einen Verbindungsschlauch 28 zwischen den Sauerstoffflaschen und der thermischen Lanze 10 und ein im Verbindungsschlauch angeordnetes Reduzierventil 30. Die in Fig. 1 schematisch dargestellte Anordnung ist an sich bekannt.

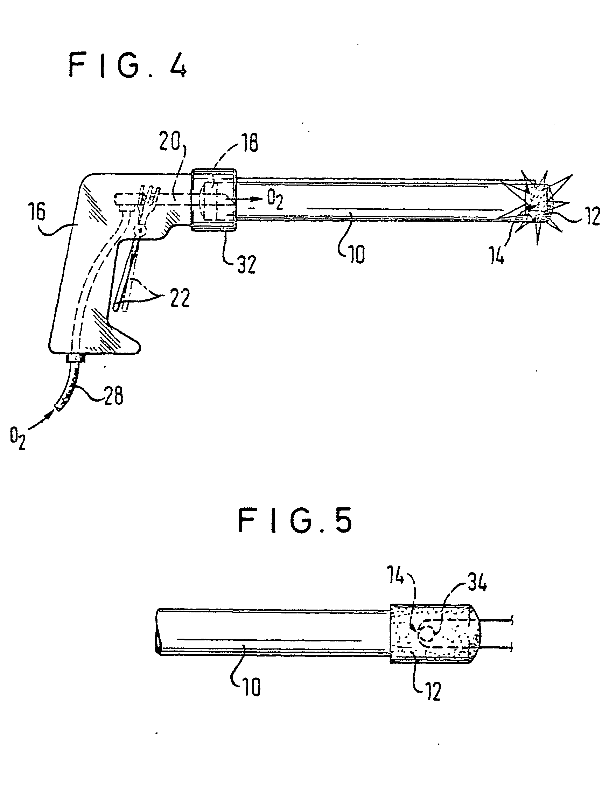

In den Figuren 3 bis 5 ist nunmehr die erfindungsgemäß ausgebildete thermische Lanze 10 näher dargestellt. Die Lanze 10 ist rohrförmig ausgebildet, wobei sie an einem Ende mit einem Pistolengriff 16 als Handhabe versehen ist. Das andere Ende der rohrförmigen Lanze 10 ist mit einer Versiegelung 12 verschlossen. Auch das pistolengriffseitige Ende der Lanze 10 ist versiegelt bzw. verschlossen (Versiegelung 18). Die Befestigung der rohrförmigen Lanze 10 an den Pistolengriff 16 erfolgt mittels eines herkömmlichen Spannfutters 32. Die Verbindung muß natürlich fluiddicht ausgebildet sein. An den Pistolengriff 16 ist der Sauerstoffschlauch 28 angeschlossen. Über diesen wird durch den Pistolengriff 16 nach Entfernung der inneren bzw. pistolengriffseitigen Versiegelung 18 Sauerstoff unter Überdruck von 5 bis 10 bar gegenüber dem äußeren Wasserdruck in die rohrförmige Lanze 10 eingeleitet. Die Entfernung der inneren Versiegelung 18 erfolgt durch eine im Pistolengriff 16 in Lanzenlängsrichtung verschiebbar

gelagerte Nadel 20, wobei die Nadel 20 vorzugsweise rohrförmig ausgebildet ist, d. h. einen axialen Durchgang für den Sauerstoff aufweist. Bei dieser Konstruktion ist der Schlauch 28 unmittelbar an dem der Versiegelung 18 abgewandten Ende der Nadel 20 angeschlossen. Die Längsverschiebung der Nadel 20 erfolgt mittels eines Abzugshahnes 22. Bei Bewegung des Abzugshahnes 22 zum Pistolengriff 16 hin wird die Nadel 20 in Richtung zum freien Lanzenende bewegt, wodurch die Versiegelung 18 durchstoßen wird. Dann kann Sauerstoff in das Lanzeninnere einströmen. Anschließend muß die äußere bzw. das freie Ende der Lanze 10 verschließende Versiegelung 12 entfernt und der in die Lanze 10 eingeleitete Sauerstoff entzündet werden. Beides erfolgt durch einen in der äußeren Versiegelung 12 eingebauten Zündsatz 14 (vgl. Figur 5), der beim vorliegenden Ausführungsbeispiel elektrisch gezündet wird. Der Zündsatz 14 umfaßt eine von Eisenthermit ummantelte Glühwendel 34, die in der Versiegelung 12 eingebettet ist, wobei die elektrischen Anschlüsse der Glühwendel 34 nach außen geführt sind. Dieses elektrischen Anschlüsse sind in nicht dargestellter Weise mit einem im Pistolengriff angeordneten elektrischen Schalter verbunden, der wiederum mit einer in Pistolengriff angeordneten Batterie in elektrischer Verbindung steht. Der elektrische Schalter sowie die Batterie sind in den Figuren ebenfalls nicht dargestellt. Bei Verwendung einer herkömmlichen Glühwendel für 2,4 Volt-Glühbirnen (Taschenlampenbirnen) genügt zum Zünden eine 5 Volt/1,5 Ampere-Batterie.

Der im Pistolengriff angeordnete elektrische Schalter ist mit dem Abzugshahn 22 so gekoppelt, daß er nach Durchstoßen der inneren Versiegelung 18 bei weiterer Bewegung des Abzugshahnes zum Pistolengriff 16 hin betätigt wird. Das heißt, die Zündung und damit die Absprengung bzw. Abschmelzung der äußeren Versiegelung 12 sowie die gleichzeitige Entzündung des in die Lanze eingeleiteten Sauerstoffs erfolgt erst nach Entfernung der inneren Versiegelung bzw. Einleitung des Sauerstoffes in die Lanze 10 unter Überdruck (2-stufige Arbeitsweise). Auf diese Weise ist eine sichere Funktion der Lanze gewährleistet.

Vorzugsweise erfolgt durch die Zündung des Zündsatzes 14 nur eine Erweichung der äußeren Versiegelung 12, so daß diese durch den unter Überdruck stehenden Sauerstoff leicht abgesprengt werden kann. Gleichzeitig muß natürlich gewährleistet sein, daß beim bzw. unmittelbar vor dem Absprengen der äußeren Verseigelung der Sauerstoff entzündet wird. Durch den nachströmenden Sauerstoff wird dann die Reaktion aufrechterhalten.

Bei der Herstellung des Zündsatzes wird zunächst eine Glühwendel, wie sie für Taschenlampenbirnen verwendet werden, mit elektrischen Anschlüssen aus Kupferdraht versehen. Dann werden die Glühwendel sowie die elektrischen Anschlüsse mit Isolierlack versehen. Anschließend wird die Glühwendel mit einer Eisenthermitmasse ummantelt, die vorher mit Alkohol aufgeschlämmt worden ist. Wenn die Thermitummantelung eine Schichtdicke von 4 bis 5 mm erreicht hat, wird sie sorgfältig getrocknet. Anschließend wird die Oberfläche der Ummantelung nochmals mit einem Isolierlack versehen, so daß sie hart und unempfindlich ist.

Dieser Zündsatz wird dann an der Versiegelung befestigt oder in diese eingebettet.

Die äußere Versiegelung kann auch insgesamt aus einem leicht entzündbaren Material bestehen. Problematisch ist dann jedoch, eine ausreichende Druckfestigkeit der Versiegelung zu erhalten. Es muß dann in der Regel eine zusätzliche äußere Versiegelung vorgesehen werden, z. B. in Form einer auf das freie Ende der Lanze 10 aufgeleimten oder auch aufgegossenen Kappe aus Kunststoff. Das Aufleimen der Kunststoffkappe hat sich bei Versuchen sehr gut bewährt, da bei geeignetem Leim (Araldit) dieser gut schmilzt, wenn die Zündreaktion in Gang kommt. Die Kappe löst sich dann problemlos vom Lanzenende.

Bei einer weiteren Ausführungsform geht man von einer gewöhnlichen thermischen Lanze aus, deren Brenn-Drähte zw.-stäbe soweit nach innen zurückgesetzt angeordnet sind, daß ein am freien Lanzenende freier Hohlraum von mindestens 20-30 mm erhalten wird. Als Brenndrähte werden z. B. 10-15 Eisendrähte mit einem Aluminiumdraht verwendet, wobei die Eisendrähte einen Durchmesser von ca. 1 mm und der Aluminiumdraht einen Durchmesser von ca. 2 mm hat. Diese Drähte brennen nach Zündung unter dem Sauerstoffstrom, wobei die Lanze langsam verbraucht wird.

Einige der Brenn-Drähte werden übriggelassen, um eine genügend große Kontaktfläche mit dem Thermit zu erhalten. Der Hohlraum wird mit Thermitpaste (Thermit-Alkohol-Gemisch) ausgefüllt. Dabei ist er sehr wichtig, daß die Paste gut aushärtet und den erwähnten Lanzenhohlraum dicht gepackt ausfüllt.

Solange die Thermitpaste noch feucht ist, wird der Zünder (Glühspirale) eingeschoben bzw. in die Paste eingedrückt. Anschließend wird das freie Lanzenende mittels einer druckfesten Versiegelung versiegelt.

Als Zünder haben sich bei Versuchen auch herkömmliche Photoblitze als vorteilhaft herausgestellt, die mechanisch arbeiten und als " Magic Cube " bezeichnet werden. Dabei wird ein Magnesiumdrahtknäuel, der sich in einem mit Sauerstoff gefüllten Glasbehälter oder dgl. befindet, mechanisch gezündet, beispielsweise durch einen mit Schießpulver gefüllten Zünder, der durch mechanischen Schlag gezündet wird und eine Stichflamme zu dem Magnesiumdrahtknäuel sendet.

**Patentansprüche**

1. Unterwasser-Schneidwerkzeug für Stahl, Beton oder dgl. mit einer an eine Sauerstoffquelle (24, 25) anschließbaren, rohrförmigen Sauerstofflanze (10), an deren einem Ende eine griffartige Handhabe

(16) oder dgl. und an deren anderen, freien Ende ein Zündsatz (14) zum Zünden des aus der Lanze (10) ausströmenden Sauerstoff vorgesehen ist, wobei die Lanze (10) vor in Gebrauchnahme wasserdicht versiegelt ist, und die Versiegelung (12) bei gleichzeitiger Entzündung des aus der Lanze ausströmenden Sauerstoffs unter Wasser absprengbar oder -schmelzbar ist, dadurch gekennzeichnet, daß die Lanze (10) an der Seite des Pistolengriffes (16) durch eine Membran (18) versiegelt ist, daß die Membran (18) durch eine im Pistolengriff (16) in Längsrichtung der Lanze (10) verschiebbare Nadel (20) durchstoßbar ist, wobei die Nadel (20) mit einem am Pistolengriff (16) angebrachten Abzugshahn (22) verschiebbar gekoppelt ist und daß die Zündung des Zündsatzes (14) koordiniert mit der Bewegung der Nadel (20) erfolgt und zwar im Anschluß an die Öffnung der Membran (18).

2. Unterwasser-Schneidwerkzeug nach Anspruch 1, dadurch gekennzeichnet, daß die Nadel (20), die vorzugsweise einen axialen Durchgang für den Sauerstoff aufweist, derart mit dem Abzugshahn (22) gekoppelt ist, daß bei Bewegung desselben zum Pistolengriff (16) hin die Nadel (20) die Membran (18) durchstößt, wobei weiterhin am Pistolengriff (16) zusätzlich eine Handhabe bzw. ein elektrischer Schalter für eine elektrische Zündung des Zündsatzes vorgesehen ist, die bzw. der bei weiterer Bewegung des Abzugshahnes (22) in Richtung auf den Pistolengriff (16) hin betätigbar ist.

3. Schneidwerkzeug nach Anspruch 1 oder 2, dadurch gekennzeichnet, daß der Zündsatz (14) einen mindestens einen Glühdraht umfassenden elektrischen Zünder aufweist, der von einer Zündmasse, vorzugsweise Eisen-, Kupfer-, Kobalt- oder dgl. Thermit ummantelt ist, und daß der so ausgebildete Zünder über den im Pistolengriff (16) angeordneten Zündschalter an die Pole einer Stromquelle anschließbar ist.

4. Unterwasser-Schneidwerkzeug nach Anspruch 3, dadurch gekennzeichnet, daß der elektrische Zündsatz (14) an der Innenseite der Verriegelung (12) des freien Endes der Lanze (10) befestigt oder in diese eingebettet ist, wobei die elektrischen Anschlüsse desselben entweder längs der Außenseite der Innenseite der Lanze zum Zündschalter hingeführt sind.

5. Schneidwerkzeug nach einem der Ansprüche 1 bis 4, dadurch gekennzeichnet, daß der Zündsatz (14) ein durch ein chemisches Reagens, z. B. konzentrierte $H_2SO_4$, leicht entzündbares Material enthält, z. B. eine Kaliumchlorid-Zuckermischung, wobei das chemische Reagens unmittelbar nach Einströmen von Sauerstoff in die Lanze (10) in Kontakt mit dem Zündmaterial bringbar ist.

6. Unterwasser-Schneidwerkzeug nach Anspruch 5, dadurch gekennzeichnet, daß das chemische Reagens sich in einer dünnen Glasblase oder dgl. an der Innenseite der das frei Ende der Lanze (10) verschließenden Versiegelung (12) befindet, wobei die Glasblase durch den Überdruck, der druck den in die Lanze (10) einströmenden Sauerstoff erzeugt wird, zerbricht, so daß das Reagens mit dem an der entsprechenden Stelle an der Innenseite der Versiegelung (12) vorgesehenen Zündmaterial in Kontakt kommt.

**Claims**

1. An underwater cutting torch for steel, concrete or the like, comprising a tubular oxygen lance (10) which is adapted to be connected to an oxygen source (24, 25) and one end of which is provided with a handlelike means (16) or the like while its other free end is provided with an igniter (14) for igniting the oxygen emerging from the lance (10), the lance (10) being sealed so as to be water-tight before being put into use, and the seal (12) being adapted to be blown or melted off underwater with simultaneous ignition of the oxygen emerging from the lance, characterised in that the lance (10) is sealed by a diaphragm (18) on the pistol grip (16) side, the diaphragm (18) is adapted to be pierced by a needle (20) slidable in the pistol grip (16) in the longitudinal direction of the lance (10), the needle (20) being slidably connected to a trigger (22) disposed on the pistol grip (16) and ignition of the igniter (14) is coordinated with the movement of the needle (20) and takes place following upon the opening of the diaphragm (18).

2. An underwater cutting torch according to claim 1, characterised in that the needle (20), which preferably has an axial passage for the oxygen, is so coupled to the trigger (22) that movement thereof towards the pistol grip (16) causes the needle (20) to pierce the diaphragm (18), the pistol grip (16) additionally being provided with a handle or electrical switch for electrical ignition of the igniter, the same being actuatable in the direction of the pistol grip (16) on further movement of the trigger (22).

3. A cutting torch according to claim 1 or 2, characterised in that the igniter (14) comprises an electrical igniter comprising at least one filament enclosed in an ignitable compound, preferably iron, copper, cobalt or similar thermite, and the igniter constructed in this way is adapted to be connected to the terminals of a current supply via the ignition switch provided in the pistol grip (16).

4. An underwater cutting torch according to claim 3, characterised in that the electrical igniter (14) is secured on or is embedded in the inside of the seal (12) of the free end of the lance (10), the electrical connections thereof being taken to the ignition switch either along the outside or the inside of the lance.

5. A cutting torch according to any one of claims 1 to 4, characterised in that the igniter (14) contains a material, e. g. a potassium chloride and sugar mixture, which is readily ignitable by a chemical reagent, e. g. concentrated $H_2SO_4$, the chemical reagent being adapted to be brought into contact with the ignitable material immediately after the entry of oxygen into the lance (10).

6. An underwater cutting torch according to claim 5, characterised in that the chemical reagent is

situated in a thin glass bubble or the like on the inside of the seal (12) sealing the free end of the lance (10), the glass bubble breaking as a result of the excess pressure produced by the oxygen entering the lance (10), so that the reagent comes into contact with the ignitable material provided at the corresponding place on the inside of the seal (12).

**Revendications**

1. Chalumeau pour découpage sous l'eau de l'acier, du béton et de matières semblables, comportant une lance tubulaire à oxygène (10) pouvant être reliée à une source d'oxygène (24, 25), à une extrémité de ladite lance étant prévue une poignée (16) ou un organe semblable et à l'autre extrémité libre de ladite lance étant prévue une charge d'allumage (14) pour l'allumage de l'oxygène qui sort de la lance (10), la lance (10) étant, avant la mise en service, obturée de manière étanche à l'eau, l'organe d'obturation (12) pouvant sauter ou fondre sous l'eau lors de l'allumage de l'oxygène sortant de la lance, caractérisé par le fait que la lance (10) est obturée du côté de la poignée du pistolet (16) par une membrane (18), que cette membrane (18) peut être percée par une aiguille (20) mobile dans la poignée pistolet (16) dans la direction longitudinale de la lance (10), ladite aiguille (20) étant accouplée à une manette (22) montée sur la poignée pistolet (16), et que l'allumage de la charge d'allumage (14) est coordonné avec le mouvement de l'aiguille (20) et a lieu après l'ouverture de la membrane (18).

2. Chalumeau pour découpage sous l'eau selon la revendication 1, caractérisé par le fait que l'aiguille (20), qui de préférence présente un passage axial pour l'oxygène, est accouplée à la manette (22) de façon à percer la membrane (18) lors du mouvement de la manette vers la poignée pistolet (16), sur la poignée pistolet (16) étant en plus prévu un organe de commande ou un interrupteur électrique pour l'allumage électrique de la charge d'allumage qui peut être manœuvré lors de la continuation du mouvement de la manette 22) vers la poignée pistolet (16).

3. Chalumeau pour découpage selon l'une des revendications 1 et 2, caractérisé par le fait que la charge d'allumage (14) présente une amorce électrique comprenant au moins un filament qui est enrobé d'une matière inflammable, de préférence de thermite de fer, de cuivre, de cobalt ou analogue, et que l'amorce ainsi agencée peut être reliée aux pôles d'une source de courant par l'interrupteur d'allumage monté dans la poignée pistolet (16).

4. Chalumeau pour découpage sous l'eau selon la revendication 3, caractérisé par le fait que la charge d'allumage (14) électrique est fixée ou logée à l'intérieur de l'obturateur (12) de l'extrémité libre de la lance (10), ses connexions électriques allant à l'interrupteur d'allumage le long de l'extérieur ou de l'intérieur de la lance.

5. Chalumeau pour découpage selon l'une des revendications 1 à 4, caractérisé par le fait que la charge d'allumage (14) contient une matière facilement inflammable par un agent chimique, notamment $H_2SO_4$ concentré, par exemple un mélange de chlorure de potassium et de sucre, l'agent chimique pouvant être mis en contact avec la matière inflammable immédiatement après l'entrée d'oxygène dans la lance (10).

6. Chalumeau pour découpage sous l'eau selon la revendication 5, caractérisé par le fait que l'agent chimique se trouve dans une bulle de verre mince ou analogue à l'intérieur de l'obturateur (12) fermant l'extrémité libre de la lance (10), cette bulle de verre étant brisée par la surpression produite par l'oxygène qui entre dans la lance (10), de sorte que l'agent chimique vient en contact avec la matière inflammable prévue à l'endroit correspondant à l'intérieur de l'obturateur (12).

FIG.1

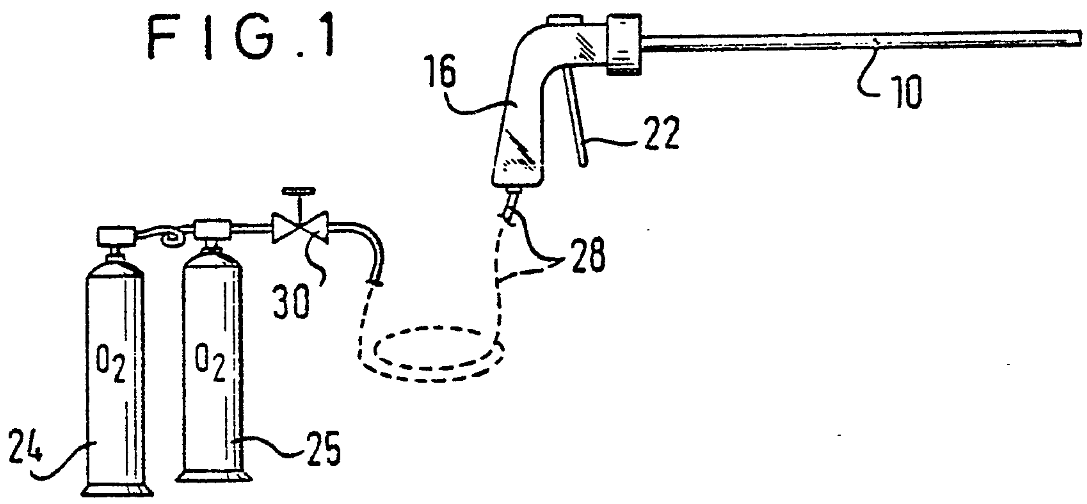


FIG.2

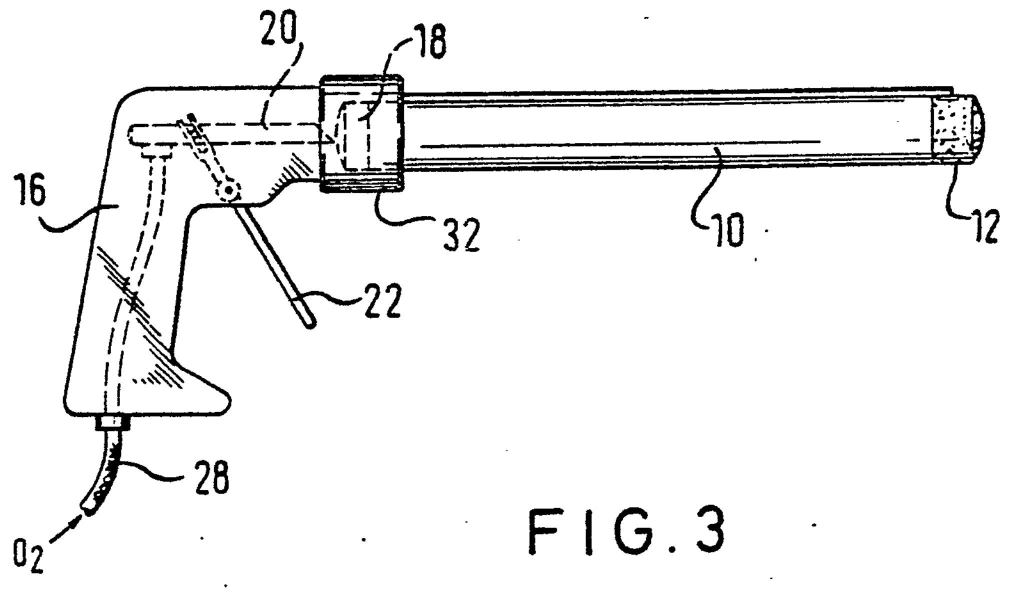


FIG.3

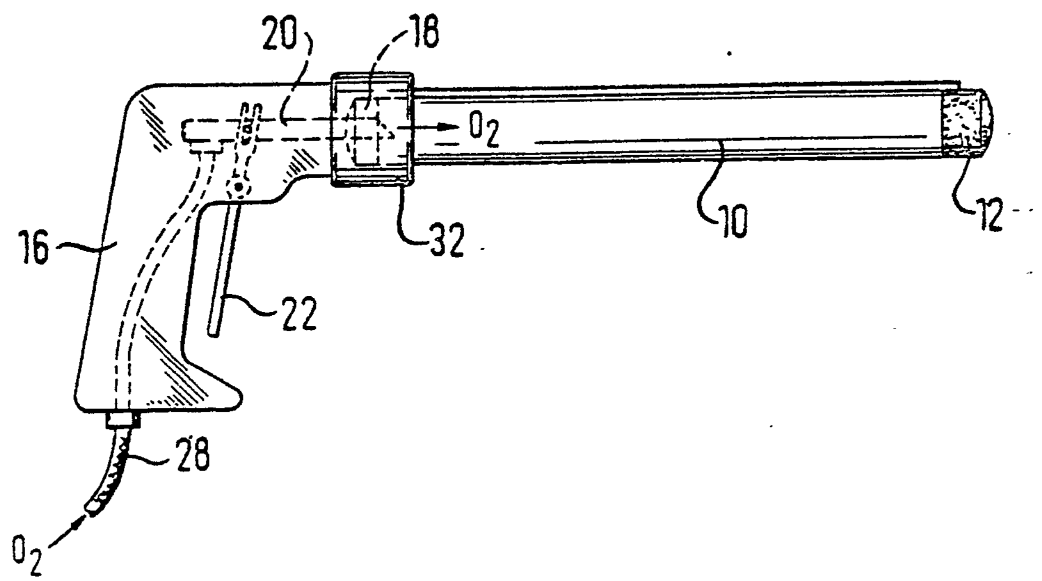

FIG. 4

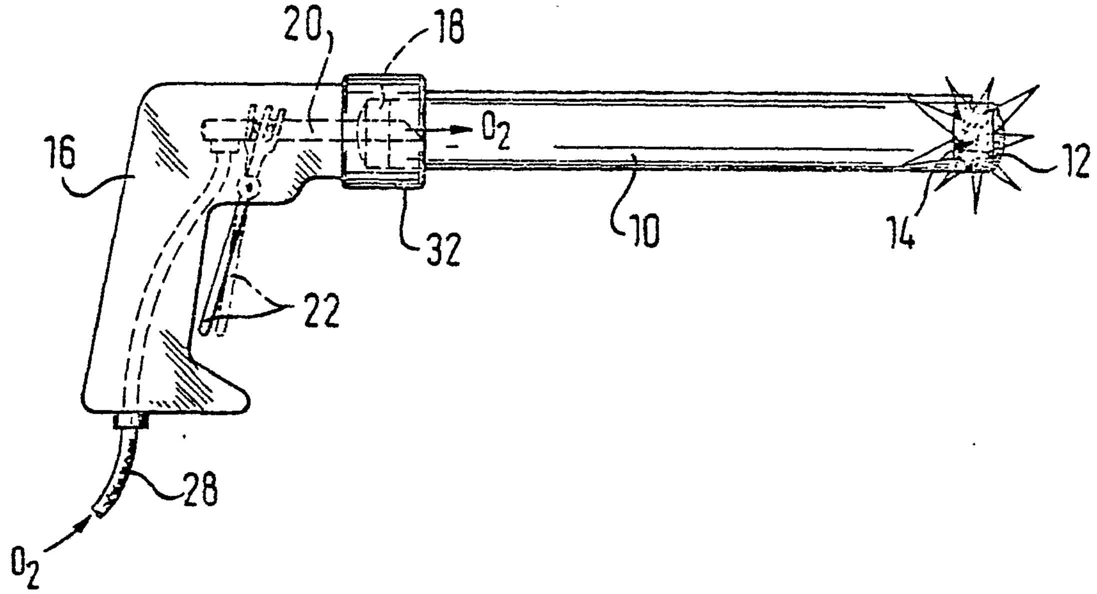


FIG. 5